# EUROPEAN PATENT SPECIFICATION

(11) **EP 4 670 584 B1**
(45) Date of publication and mention of the grant of the patent: **09.09.2026**
(21) Application number: 25185123.4
(22) Date of filing: 25.06.2025
(51) Int. Cl.: A47J 31/60, A47J 31/52, A47J 31/46, A47J 31/56, A47J 31/54

(54) **CONTROL METHOD FOR BEVERAGE DEVICE AND BEVERAGE DEVICE**
STEUERUNGSVERFAHREN FÜR GETRÄNKEVORRICHTUNG UND GETRÄNKEVORRICHTUNG
PROCÉDÉ DE COMMANDE POUR DISPOSITIF DE BOISSON ET DISPOSITIF DE BOISSON

(30) Priority: 27.06.2024 CN 202410850744
(43) Date of publication of application: 31.12.2025
(73) Proprietor: Kalerm Technology (Suzhou) Co., Ltd, Suzhou Jiangsu 215134 (CN)
(72) Inventor: WANG, Hongming, Suzhou, Jiangsu, 215134 (CN); LU, Dean, Suzhou, Jiangsu, 215134 (CN); DING, Yu, Suzhou, Jiangsu, 215134 (CN)
(74) Representative: Winter, Brandl - Partnerschaft mbB

(56) References cited:
- CN-A- 117 781 259
- US-A1- 2014 197 193
- US-A1- 2019 350 405

## Description

### TECHNICAL FIELD

The present application relates to a field of beverage preparation technology, particularly to a control method for beverage device and a beverage device.

### BACKGROUND

A beverage device can use an internal or external water source to provide water for generating beverages.

Currently, beverage devices, such as coffee machines, on the market generally comprise a boiler for generating steam, the steam can be used to prepare hot water, as well as hot beverages such as milk foam or hot milk. However, after long-term operation of the boiler, the water inside the boiler becomes increasingly turbid, and the pressure inside the boiler increases, the steam state becomes unstable. In the prior art, a large amount of water needs to be discharged regularly to output impurities in the boiler. However, discharging a large volume water at once will cause the boiler to reheat, which takes a long time and affects the experience of preparation of the next cup.

A known beverage device is disclosed in US 2019/350405 A1.

### SUMMARY

The present application provides a control method for a beverage device and a beverage device.

The object of the present application is to provide a control method for a beverage device, with liquid in a first boiler kept clear, scale formation reduced, and beverage preparation efficiency enhanced.

Another object of the present application is to provide a beverage device, with liquid in a first boiler kept clear, scale formation reduced.

In an exemplary aspect, the present application provides a control method for a beverage device, comprising:
starting counting of a number of beverage preparation completion signals, upon receiving an Nth beverage preparation signal;
determining whether the number satisfies a first threshold relationship;
when the number satisfies the first threshold relationship, controlling a first discharge valve on a first discharge line to open for a first preset duration, to discharge liquid in a first boiler; wherein the first discharge line is connected to the first boiler, and the first boiler is configured to generate steam;
wherein the first threshold relationship is that the number equals an integer multiple of M;
wherein both N and M are natural numbers greater than or equal to 1.

In another exemplary aspect, the present application provides a beverage device, comprising:
a liquid supply source;
an outlet assembly, configured to output beverage;
a first boiler, connected between the liquid supply source and the outlet assembly, configured to generate steam;
further comprising a first discharge line, wherein an input end of the first discharge line is connected to the first boiler, an output end of the first discharge line is a fluid discharge outlet; a first discharge valve is provided between the input end of the first discharge line and the output end of the first discharge line;
a controller, electrically connected to the first discharge valve, wherein the controller is configured to execute the control method for the beverage device according to any one of the above embodiments.

The beverage device and the control method for the beverage device provided by this application, discharge part of the liquid in the first boiler after a certain number of beverages are prepared, that is, discharge the liquid in the first boiler in small amounts for multiple times. This can keep the liquid in the first boiler clear, reduce the generation of scale, maintain the stable water-vapor state inside the first boiler, and meanwhile, have little effect on the overall efficiency of the beverage device in preparing beverages.

### BRIEF DESCRIPTION OF DRAWINGS

Fig. 1 is a schematic diagram of a liquid pipeline system of a beverage device according to an embodiment of the present application.
Fig. 2 is a sectional view of a first discharge valve according to an embodiment of the present application.
Fig. 3 is another view of the first discharge valve shown in Fig. 2.
Fig. 4 is a flow diagram of a control method for a beverage device according to an embodiment of the present application.
Fig. 5 is a schematic diagram of a first boiler portion of the liquid pipeline system shown in Fig. 1.

### DETAILED DESCRIPTION OF THE PRESENT INVENTION

The following detailed description of the present application will be made with reference to the specific embodiments shown in the drawings. However, these embodiments do not limit the present application, and any structural, methodological, or functional variations made by those skilled in the art based on these embodiments are comprised within the scope of protection of the present application.

It should be understood that the terms "first", "second" and "third" used in this document can be interchangeably used to distinguish one component from another, and these terms are not intended to indicate the position or importance of the respective components. The terms "upstream" and "downstream" refer to the relative direction of fluid flow in the fluid passage. For example, "upstream" refers to the direction from which the fluid flows, while "downstream" refers to the direction to which the fluid flows.

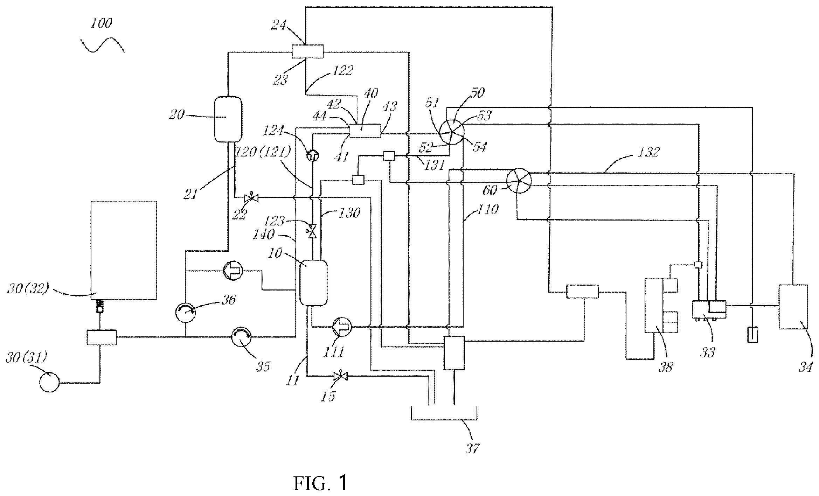

The present application provides a beverage device. The beverage device can be a coffee machine or other beverage device. Referring to Fig. 1, an automatic coffee machine is taken as an example for illustration in the embodiment provided by the present application.

An automatic coffee machine generally comprises a liquid supply source 30. The liquid supply source 30 is used to supply water for brewing coffee. The automatic coffee machine generally also comprises a brewing device 38 for mixing water with coffee powder, and a boiler for heating water supplied by the liquid supply source 30. The automatic coffee machine forms coffee beverage through hot water extraction.

The automatic coffee machine may also comprise a milk frother. The boiler provides steam to the milk frother, and the steam and milk can be mixed to form hot milk, or the steam, air and milk can be mixed to form hot milk foam.

The fluid flow path from the liquid supply source 30 to where users extract various beverages can be considered as a liquid pipeline system 100 of the automatic coffee machine. The liquid pipeline system 100 provided by the present application will be described in detail below.

Referring to Fig. 1, the liquid pipeline system 100 comprises a liquid supply source 30 and an outlet assembly 33. The outlet assembly 33 is configured to output beverages. The liquid pipeline system 100 may also comprise a brewing device 38 connected between the liquid supply source 30 and the outlet assembly 33. Beverages brewed by the brewing device 38 can be discharged from the outlet assembly 33.

The liquid supply source 30 can be a supply tank detachably connected to the main body of the beverage device. Users can manually fill the supply tank, or the supply tank can be connected to a water purifier for automatically filling liquid. Of course, the liquid supply source 30 can also be directly configured as an external water purifier, eliminating the need for a supply tank in the main body of the beverage device, thus reducing the volume and cost of the beverage device.

The liquid supply source 30 can supply various different liquids. In one embodiment of the present application, the liquid supply source 30 comprises a first liquid supply source 31. The first liquid supply source 31 can be an external water purifier for supplying water. The beverage device can use water supplied by the first liquid supply source 31 to prepare beverages.

The liquid supply source 30 also comprises a second liquid supply source 32. The second liquid supply source 32 can be a supply tank that can be filled with cleaning solution. When users need to clean the liquid pipeline system 100 of the beverage device, cleaning solution can be supplied by the second liquid supply source 32.

The liquid pipeline system 100 also comprises a first boiler 10. The first boiler 10 is connected between the liquid supply source 30 and the outlet assembly 33. The first boiler 10 is configured to generate steam.

In one embodiment of the present application, the liquid pipeline system 100 also comprises a second boiler 20. The second boiler 20 is also connected between the liquid supply source 30 and the outlet assembly 33. The second boiler 20 can be used to output hot water. For example, the second boiler 20 is used to supply hot water to the first boiler 10, or to supply hot water to the brewing device 38.

The liquid pipeline system 100 also comprises water pumps. In this embodiment, the water pumps may comprise a first water pump 35 and a second water pump 36. The first water pump 35 is connected between the liquid supply source 30 and the first boiler 10, and liquid can be supplied from the liquid supply source 30 to the first boiler 10 by starting the first water pump 35. The first water pump 35 is also connected between the liquid supply source 30 and the second boiler 20, and liquid can also be supplied from the liquid supply source 30 to the second boiler 20 by starting the first water pump 35. The second water pump 36 is also connected between the liquid supply source 30 and the second boiler 20, and liquid can be supplied to the second boiler 20 by operating the second water pump 36.

The second boiler 20 can also be used to supply liquid to the first boiler 10. A liquid supply line 110 can be connected between a liquid inlet of the first boiler 10 and a liquid outlet of the second boiler 20, the first water pump 35 or the second water pump 36 can be started to supply liquid from the second boiler 20 to the first boiler 10.

Of course, only one water pump can be provided to supply liquid to both the first boiler 10 and the second boiler 20.

In one embodiment of the present application, the liquid pipeline system 100 also comprises a first discharge line 11. An input end of the first discharge line 11 is connected to the first boiler 10. An output end of the first discharge line 11 is a fluid discharge outlet. A first discharge valve 15 is provided between the input end and the output end of the first discharge line 11.

Opening the first discharge valve 15 allows liquid in the first boiler 10 to be discharged through the first discharge line 11, and closing the first discharge valve 15 prevents liquid in the first boiler 10 from being discharged through the first discharge line 11.

The beverage device may also comprise a waste liquid tray 37. The output end of the first discharge line 11 is in communicated with the waste liquid tray 37, and liquid in the first boiler 10 can be discharged into the waste liquid tray 37 through the first discharge line 11. The waste liquid tray 37 can be removed from the beverage device, so users can conveniently remove the waste liquid tray 37 for cleaning.

Discharging liquid from the first boiler 10 through the first discharge line 11 will simultaneously discharge scale and other impurities in the first boiler 10. Discharging scale and other impurities in the first boiler 10through the first discharge line 11 can prevent scale and other impurities from flowing through the lines between the first boiler 10 and the outlet assembly 33, thereby avoiding blockage of the lines between the first boiler 10 and the outlet assembly 33, or damage to valves or other components installed between the first boiler 10 and the outlet assembly 33.

Preferably, the input end of the first discharge line 11 can be connected to the bottom of the first boiler 10, so that scale and other impurities deposited at the bottom of the first boiler 10 can be discharged through the first discharge line 11 as much as possible, achieving better scale removal effect.

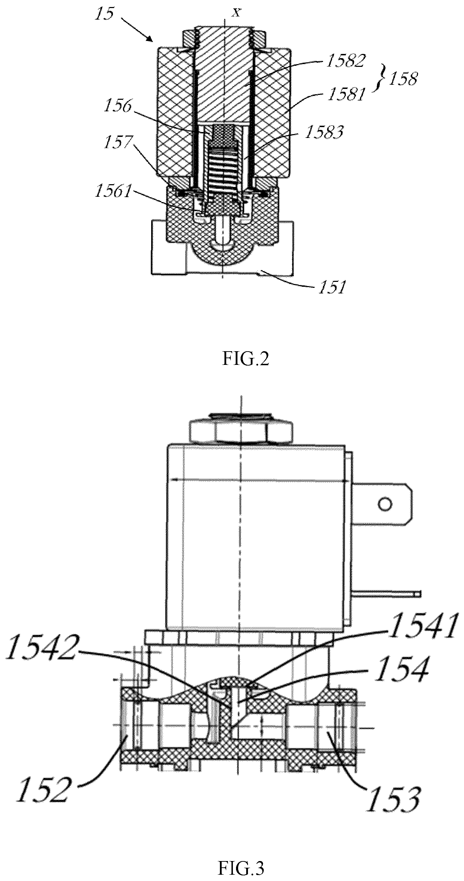

In one embodiment of the present application, the first discharge valve 15 is an electromagnetic valve. Referring to Figs. 2 and 3, the first discharge valve 15 comprises a liquid discharge valve body 151. The liquid discharge valve body 151 comprises an inlet 152, an outlet 153, and a liquid channel 154. The inlet 152 is in communication with the first boiler 10. Liquid in the first boiler 10 can be discharged to the waste liquid tray 37 successively through the input end of the first discharge line 11, the inlet 152, the liquid channel 154, the outlet 153, and the output end of the first discharge line 11.

One end of the liquid channel 154 near the inlet 152 is a flow passage port 1541, and the other end of the liquid channel 154 is in communication with the outlet 153. The first discharge valve 15 further comprises an electromagnetic drive assembly 158 and a valve core assembly 156. The electromagnetic drive assembly 158 is configured to drive the valve core assembly 156 to move to close or open the flow passage port 1541.

When the valve core assembly 156 opens the flow passage port 1541, the inlet 152 and the outlet 153 are in fluid communication through the liquid channel 154. When the valve core assembly 156 closes the flow passage port 1541, the flow path between the inlet 152 and the outlet 153 is cut off. Referring to Figs. 2 and 3, both show schematic views when the valve core assembly 156 closes the flow passage port 1541.

Furthermore, in this embodiment, the first discharge valve 15 also comprises a reset element 157 connected to the valve core assembly 156. The reset element 157 can be a conical spring, which can be fitted around the outside of the valve core assembly 156.

Under the drive of the electromagnetic drive assembly 158, the valve core assembly 156 can move in a direction away from the flow passage port 1541 to open the flow passage port. Under the drive of the reset element 157, the valve core assembly 156 can move toward the flow passage port 1541 until closing the flow passage port 1541.

The electromagnetic drive assembly 158 comprises a coil winding 1581 and an iron core 1582 mounted inside the coil winding 1581. A mounting space 1583 is formed inside the coil winding 1581, and at least parts of the valve core assembly 156 and the iron core 1582 are located within the mounting space 1583. When the coil winding 1581 is energized, the iron core 1582 becomes magnetized, and the electromagnetic drive assembly 158 drives the valve core assembly 156 to move toward the iron core 1582. That is, the electromagnetic drive assembly 158 drives the valve core assembly 156 to move in a direction away from the flow passage port 1541, until the valve core assembly 156 contacts the iron core 1582, thereby opening the flow passage port 1541.

The reset element 157 is also mounted within the mounting space 1583. The two ends of the reset element 157 can respectively abut against the electromagnetic drive assembly 158 and the valve core assembly 156. When the valve core assembly 156 moves in a direction away from the flow passage port 1541, the reset element 157 undergoes elastic deformation and accumulates elastic force. When the coil winding 1581 is de-energized, the iron core 1582 becomes demagnetized, the elastic force of the reset element 157 is released, thereby driving the valve core assembly 156 to move toward the flow passage port 1541 until reaching the position to close the flow passage port 1541. Thus, the opening and closing of the first discharge valve 15 can be controlled by controlling the energization and de-energization of the coil winding 1581, thereby controlling the opening or closing of the first discharge line 11.

The valve core assembly 156 further comprises a sealing member 1561. The sealing member 1561 is used to seal the flow passage port 1541. The liquid discharge valve body 151 comprises a flow passage wall 1542 forming the liquid channel 154. One end of the flow passage wall 1542 forming the flow passage port 1541 can abut against the sealing member 1561 to seal the flow passage port 1541. The installation of the sealing member 1561 can enhance the sealing effect of the valve core assembly 156 on the flow passage port 1541.

In one embodiment of the present application, providing a control method for a beverage device. The control method can be used for any embodiment of the beverage device of the present application. The beverage device comprises a controller. The controller is electrically connected to the first discharge valve 15. The controller is configured to execute the control method for the beverage device according to any embodiment of the present application.

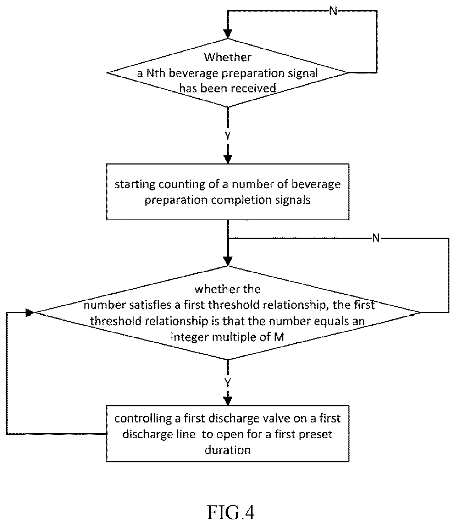

Referring to Fig. 4, which shows a flow diagram of a control method for a beverage device according to one embodiment of the present application. The control method for the beverage device comprises the following steps:
starting counting of a number of beverage preparation completion signals upon receiving an Nth beverage preparation signal;
determining whether the number satisfies a first threshold relationship;
when the number satisfies the first threshold relationship, controlling a first discharge valve 15 on a first discharge line 11 to open for a first preset duration to discharge liquid in a first boiler 10, wherein the first discharge line 11 is connected to the first boiler 10, and the first boiler 10 is configured to generate steam;
wherein the first threshold relationship is that the number equals an integer multiple of M; wherein both N and M are natural numbers greater than or equal to 1.

In this embodiment, the beverage device can have multiple beverage modes, and the beverage device can comprise a control panel through which users can select different beverage modes to issue corresponding beverage preparation signals.

In one embodiment, the beverage preparation signal can be a beverage preparation signal corresponding to any beverage mode.

For examples: When N=1, M=1, that is, starting the counting of the number of beverage preparation completion signals, upon receiving the first beverage preparation signal. When the number equals an integer multiple of 1 (M), that is, each time a beverage preparation completion signal is received, controlling the first discharge valve 15 to open for the first preset duration. In other words, from the moment the beverage equipment starts preparing the first cup of beverage, the first discharge valve 15 is controlled to open for the first preset duration after each cup is prepared.

When N=1, M=3, then controlling the counting of the number of beverage preparation completion signals upon receiving the first (N) beverage preparation signal .When the number equals an integer multiple of 3 (M), that is, every three beverage preparation completion signals (such as when the value equals 3, 6, 9, 12...) are received, controlling the first discharge valve 15 to open for the first preset duration. That is, from the moment the beverage equipment starts preparing the first cup of beverage, the first discharge valve 15 is controlled to open for the first preset duration after every three cups are prepared.

When N=2, M=1, that is, starting from the preparation of second (N) cup, after each 1 (M) cup of beverage is prepared, the first discharge valve 15 is controlled to open for the first preset duration.

Similarly, when N=2, M=3, that is, starting from the preparation of the second (N) cup of beverage, after every 3 (M) cups of beverages are prepared, the first discharge valve 15 is controlled to open for the first preset duration.

In other embodiments provided by the present application, the beverage preparation signal can be a beverage preparation signal corresponding to any beverage mode. Wherein, any beverage mode comprises a steam beverage mode using steam from the first boiler 10 to prepare beverages and a regular beverage mode not using steam from the first boiler 10 to prepare beverages. Of course, the beverage preparation signal can also be only the beverage preparation signal corresponding to the steam beverage mode using steam from the first boiler 10.

Since steam is output from the first boiler 10 only when using steam from the first boiler 10 to prepare beverages, this process changes the steam state and pressure in the first boiler 10. Therefore, when the beverage preparation signal is only the beverage preparation signal corresponding to the steam beverage mode using steam from the first boiler 10, it can reduce the number of times the first discharge line 11 opens.

During the use of the first boiler 10, when liquid in the first boiler 10 evaporates to generate steam and the steam is delivered to downstream lines, pressure in the first boiler 10 is prone to fluctuations. The evaporation-condensation balance of liquid in the first boiler 10 can easily be disrupted, causing sudden boiling of liquid in the first boiler 10. Consequently, the liquid level in the first boiler 10 may falsely elevate.

During the use of the first boiler 10, discharging some superheated liquid, formed by mixing liquid and steam, from the first boiler 10 through the first discharge line 11 timely, can reduce the phenomenon of disrupted evaporation-condensation balance of the liquid, and reduce pressure in the first boiler 10, and maintain stable steam state in the first boiler 10.

When a liquid level sensor 13 is provided in the first boiler 10, it can also avoid false liquid level detection caused by false elevation of liquid level, and can also avoid false detection of the liquid level sensor 13 caused by excessive internal pressure in the first boiler 10. It is understandable that when pressure in the space above the liquid surface in the first boiler 10 increases, steam humidity also increases, the liquid level sensor 13 and liquid in the first boiler 10 are more likely to conduct through high-humidity steam, causing false detection of the liquid level sensor 13.

Impurities and dirt in the first boiler 10 can also be discharged through the first discharge line 11, avoiding excessive turbidity of liquid in the first boiler 10, thereby preventing calcium and magnesium ions or other impurities from adhering to the liquid level sensor 13 and affecting the sensitivity of the liquid level sensor 13. It is understandable that when the sensitivity of the liquid level sensor 13 is low, false detection is more likely to occur.

When the internal water level of the first boiler 10 is low, liquid replenishment needs to be performed through the second boiler 20. However, if the liquid level sensor 13 makes a false detection, there will be a phenomenon where the internal water level of the first boiler 10 is low but no liquid replenishment occurs, while the heating wire in the first boiler 10 continues heating. When the water level drops to a certain level, the heating wire becomes exposed above the liquid surface, leading to dry burning and blackening of the heating element, reducing the service life of the first boiler 10.

Discharging a certain amount of liquid from the first boiler 10 in small quantities and multiple times will not affect user operation. After each discharge of liquid through the first discharge line 11, the first boiler 10 does not need large amounts of liquid replenishment, which will not affect beverage preparation efficiency. Moreover, the discharged liquid will not output from the outlet assembly 33, thereby enhancing user experience.

Furthermore, referring to Fig. 1, in one embodiment of the present application, the beverage device also comprises a second discharge line 21. An input end of the second discharge line 21 is connected to the bottom of the second boiler 20, an output end of the second discharge line 21 is a fluid discharge outlet. A second discharge valve 22 is provided between the input end and the output end of the second discharge line 21.

The second discharge valve 22 can also be an electromagnetic valve. The structure of the second discharge valve 22 can be the same as that of the first discharge valve 15, which will not be described here again.

By opening the second discharge valve 22, liquid in the second boiler 20 can be discharged through the second discharge line 21, scale and other impurities deposited in the second boiler 20 can also be discharged through the second discharge line 21 conveniently. By connecting the input end of the second discharge line 21 to the bottom of the second boiler 20, during the discharge of liquid from the second boiler 20 through the second discharge line 21, dirt deposited at the bottom of the second boiler 20 can be discharged through the second discharge line 21 into the waste liquid tray 37 as much as possible, achieving better scale removal effect.

The liquid in the second boiler 20 can also be discharged into the waste liquid tray 37 through the second discharge line 21 for convenient cleaning by users.

In this embodiment, a liquid supply line 110 is connected between a liquid outlet of the second boiler 20 and a liquid inlet of the first boiler 10. The first water pump 35 or the second water pump 36 can be started to supply liquid from the second boiler 20 to the first boiler 10 through the liquid supply line 110. Since the liquid in the second boiler 20 is already heated, it can increase the speed of steam generation in the first boiler 10, improving beverage preparation efficiency.

Furthermore, in this embodiment, after starting counting of a number of beverage preparation completion signals, the control method for the beverage device also comprises the following steps:
determining whether the number satisfies a second threshold relationship;
when the number satisfies the second threshold relationship, controlling the second discharge valve 22 on the second discharge line 21 to open for a second preset duration to discharge liquid in the second boiler 20; wherein, the second discharge line 21 is connected to the second boiler 20, and the second boiler 20 is configured to supply liquid to the first boiler 10; wherein the second threshold relationship is that the number equals an integer multiple of J; wherein J is a natural number greater than or equal to 1.

In this embodiment, J can be equal to or different from M. The first preset duration can be equal to or different from the second preset duration. It can be understood that the second discharge valve 22 can be opened synchronously with or asynchronously with the first discharge valve 15.

Preferably, J is greater than or equal to M. It can be understood that, in this embodiment, the number of openings of the second discharge line 21 is less than or equal to the number of openings of the first discharge line 11, that is, the frequency of fluid discharge from the second boiler 20 to the exterior is less than or equal to the frequency of fluid discharge from the first boiler 10 to the exterior.

During operation of the beverage device, after beverage preparation is completed, controlling the second discharge valve 22 to open for the second preset duration can discharge a certain amount of liquid from the second boiler 20, carrying out some dirt and impurities from the second boiler 20, ensuring the liquid in the second boiler 20 remains clear. Thus, when the second boiler 20 supplies liquid to the first boiler 10, it can further ensure the clarity of liquid in the first boiler 10, further reducing misjudgment of the liquid level sensor 13.

Since the second boiler 20 is not used for generating steam, the rate of scale formation in the second boiler 20 is less than that in the first boiler 10, and the second boiler 20 is used to supply liquid to the first boiler 10, the second boiler 20 only indirectly affects the water quality in the first boiler 10. Therefore, the number of openings of the second discharge valve 21 can be relatively reduced.

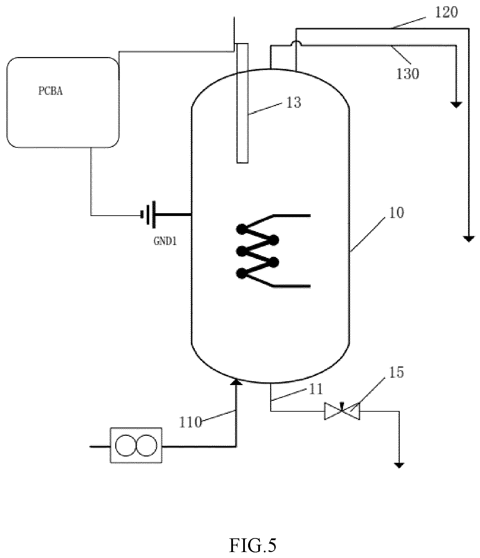

Furthermore, referring to Fig. 5, in this embodiment, the beverage device comprises a liquid level sensor 13 mounted inside the first boiler 10. The liquid level sensor 13 is used to detect the liquid level signal in the first boiler 10. The mounting position of the liquid level sensor 13 is away from the input end of the first discharge line 11. As shown in Fig. 5, the input end of the first discharge line 11 is connected to the bottom of the first boiler 10, and the liquid level sensor 13 is mounted at the top of the first boiler 10. Thus, during the use of the first boiler 10, discharging liquid from the first boiler 10 through the first discharge line 11 can reduce false liquid level detection by the liquid level sensor 13.

In this embodiment, the controller is electrically connected to the liquid level sensor 13. The controller is also electrically connected to the water pump. The controller is further configured to receive the working parameter(s) of the liquid level sensor 13 to obtain the liquid level signal in the first boiler 10, and when the working parameter(s) satisfies a liquid replenishment condition, control the water pump to work to supply liquid from the liquid supply source 30 to the first boiler 10.

In this embodiment, liquid can be supplied directly to the first boiler 10 from the liquid supply source 30, or liquid can be supplied indirectly to the first boiler 10 from the second boiler 20.

The control method for the beverage device provided in one embodiment of the present application also comprises a liquid replenishment step, which comprises:
detecting the working parameter(s) of the liquid level sensor 13;
when the working parameter(s) satisfies a liquid replenishment condition, controlling the water pump to operate and controlling the liquid supply line 110 to open, so as to supply liquid to the first boiler 10 from the second boiler 20;
when the working parameter(s) does not satisfy the liquid replenishment condition, controlling the liquid supply line 110 to close.

In this embodiment, the liquid level sensor can be a liquid level probe 13, and the working parameter(s) of the liquid level sensor 13 can be the current or voltage of the circuit to which the liquid level probe 13 belongs.

When the liquid level in the first boiler 10 is higher than a first preset level, the liquid level probe 13 can extend below the liquid surface in the first boiler 10. At this time, the circuit to which the liquid level probe 13 belongs conducts through direct contact between the liquid level probe 13 and the liquid in the first boiler 10. At this time, the working parameter(s) of the liquid level probe 13 does not satisfy the liquid replenishment condition.

The working parameter(s) of the circuit to which the liquid level probe 13 belongs can vary with the liquid level in the first boiler 10. When the liquid level in the first boiler 10 is lower than the first preset level, the liquid level probe 13 is outside the liquid surface, and the liquid level probe 13 does not directly contact the liquid in the first boiler 10, but due to the presence of steam in the first boiler 10, the liquid level probe 13 can conduct with the liquid in the first boiler 10 through steam. At this time, the working parameter(s) of the liquid level probe 13 satisfies the liquid replenishment condition.

During operation of the beverage device, frequently discharging small amounts of superheated water (mixture of water and steam) from the first boiler 10 can carry out some dirt, keep the liquid in the first boiler 10 clear, prevent calcium and magnesium ions or other impurities from adhering to the liquid level probe 13 and affecting the sensitivity of the liquid level probe 13. It can also reduce the phenomenon of disrupted water evaporation-condensation balance, reduce pressure in the space above the liquid surface, maintain stable steam state inside the first boiler 10.Thereby it can reduce false detection of the liquid level probe 13, prevent the phenomenon where the internal water level of the first boiler 10 is low but no liquid replenishment occurs due to false detection of the liquid level probe 13, which would cause the heating wire in the first boiler 10 to burn dry and blacken. Thus, this application can extend the service life of the first boiler 10.

Furthermore, in one embodiment of the present application, the control method for the beverage device also comprises an emptying step, which comprises:
receiving an emptying signal;
controlling the first discharge valve 15 to open to discharge liquid in the first boiler 10 through the first discharge line 11 by steam generated in the first boiler 10.

In this embodiment, users can select the emptying mode through the control panel, that is, issue an emptying signal. For example, before transporting the beverage device, the emptying mode can be selected to empty the liquid in the liquid pipeline system 100 for convenient transportation, preventing damage to the liquid pipeline system 100 due to thermal expansion and contraction of liquid during transportation.

In this embodiment, after receiving the emptying signal, liquid supply to the first boiler 10 can be stopped. When receiving the emptying signal, heating the first boiler 10 to generate steam. Of course, when receiving the emptying signal, there is already a certain amount of steam in the first boiler 10, heating of the first boiler 10 is not required, and directly opening the first discharge valve 15 can empty the liquid in the first boiler 10 through the steam in the first boiler 10.

In this embodiment, the first discharge line 11 is connected to the bottom of the first boiler 10. Under the pressure of steam in the first boiler 10, the liquid in the first boiler 10 can be completely discharged from the first discharge line 11, without residue in the first boiler 10, achieving clean discharge and high discharge efficiency.

When the liquid in the first boiler 10 is discharged, the liquid in the first boiler 10 will not flow through the lines between the first boiler 10 and the outlet assembly 33. Therefore, dirt in the first boiler 10 will not block the downstream lines of the first boiler 10 or cause damage to downstream components.

Continuing to refer to Fig. 1, in one embodiment of the present application, the liquid pipeline system further comprises a first steam supply line 120. The first steam supply line 120 connects a steam outlet of the first boiler 10 with the liquid outlet of the second boiler 20. The second boiler 20 can supply hot water to the first boiler 10 through the liquid outlet of the second boiler 20. The liquid outlet of the second boiler 20 is provided at the top of the second boiler 20. The first steam supply line 120 is configured to supply steam from the first boiler 10 to the second boiler 20, to discharge liquid in the second boiler 20 through the second discharge line 21 by steam.

In this embodiment, before controlling the first discharge valve 15 to open, the emptying step of the beverage device control method also comprises:
controlling the first steam supply line 120 to open to supply steam from the first boiler 10 to the second boiler 20;
controlling the second discharge valve 22 on the second discharge line 21 to open, so as to discharge liquid in the second boiler 20 through the second discharge line 21 by steam from the first boiler 10.

Before discharging liquid in the first boiler 10 through the first discharge line 11 by steam generated in the first boiler 10, the second boiler 20 is first emptied by steam generated in the first boiler 10.

In this embodiment, during the emptying process, by supplying steam from the first boiler 10 to the second boiler 20 through the first steam supply line 120, pressure in the second boiler 20 can be increased, thereby enabling rapid emptying of liquid in the second boiler 20 and avoiding liquid residue in the second boiler 20, achieving good emptying effect.

The connection point between the second boiler 20 and the first steam supply line 120 is located at the top of the second boiler 20. Thus steam can be directly supplied to the space above the liquid surface in the second boiler 20. And the input end of the second discharge line 21 is connected to the bottom of the second boiler 20, that is, steam enters from the top of the second boiler 20 and liquid discharges from the bottom of the second boiler 20, achieving good emptying effect and high emptying efficiency.

Furthermore, in one embodiment of the present application, the liquid pipeline system 100 further comprises a second steam supply line 130. An input end of the second steam supply line 130 is connected to the steam outlet of the first boiler 10, and an output end of the second steam supply line 130 is connected to the outlet assembly 33.

In this embodiment, the steam outlet of the first boiler 10 can be provided at the top of the first boiler 10. The first boiler 10 can be provided with two steam outlets, connected to the first steam supply line 120 and the second steam supply line 130 respectively.

In the control method for the beverage device provided in this embodiment, before controlling the first discharge valve 15 to open, the emptying step also comprises:
controlling the second steam supply line 130 to open to allow steam from the first boiler 10 to enter the second steam supply line 130, discharging liquid in the second steam supply line 130 through the outlet assembly 33 by steam from the first boiler 10.

The liquid in the second steam supply line 130 and its downstream lines can be completely discharged from the outlet assembly 33 under the action of steam, avoiding liquid residue in the second steam supply line 130 and its downstream lines, and having a high discharge efficiency.

In this embodiment, the second steam supply line 130 can comprise a first steam cleaning branch line 131 and a second steam cleaning branch line 132. Both the second steam cleaning branch line 132 and the first steam cleaning branch line 131 connect the steam outlet of the first boiler 10 with the outlet assembly 33. A milk tank 34 is provided on the second steam cleaning branch line 132, and a brewing device 38 is provided on the first steam cleaning branch line 131.

Furthermore, in one embodiment of the present application, an output connection valve 40 is provided on the first steam supply line 120. The output connection valve 40 comprises a first valve port 41, a second valve port 42, and a third valve port 43. The first steam supply line 120 can comprise a steam supply branch line 121. The steam supply branch line 121 connects the steam outlet of the first boiler 10 to the first valve port 41. The first steam supply line 120 can also comprise a connection line 122 connecting the second valve port 42 with the liquid outlet of the second boiler 20. A liquid supply line 110 is connected between the third valve port 43 and the liquid inlet of the first boiler 10.

Steam from the first boiler 10 can be supplied to the second boiler 20 successively through the steam supply branch line 121, the output connection valve 40, and the connection line 122, thereby promoting complete discharge of liquid in the second boiler 20 through the second discharge line 21. Liquid in the second boiler 20 can also be supplied to the first boiler 10 successively through the connection line 122, the output connection valve 40, and the liquid supply line 110, achieving liquid replenishment from the second boiler 20 to the first boiler 10.

In this embodiment, the output connection valve 40 can selectively open or close any valve port. The connection line 122 can be selectively used to deliver steam from the output connection valve 40 to the second boiler 20, or to deliver liquid from the second boiler 20 to the output connection valve 40. The connection line 122 features a high functional integration and compact overall pipeline.

A first electromagnetic valve 123 is further connected to the steam supply branch line 121. When steam from the first boiler 10 needs to be supplied to the second boiler 20, such as when receiving an emptying command, heating the first boiler 10, and opening the first electromagnetic valve 123, and opening the first valve port 41 and second valve port 42 of the output connection valve 40. The steam supply branch line 121 and connection line 122 connect to form the first steam supply line 120, allowing steam from the first boiler 10 to be supplied to the second boiler 20 through the first steam supply line 120, thereby promoting emptying of liquid in the second boiler 20.

When liquid replenishment from the second boiler 20 to the first boiler 10 is needed, starting the second water pump 36 located between the second boiler 20 and liquid supply source 30, opening the second valve port 42 and the third valve port 43 of the output connection valve 40 ,so as to establish communication between the connection line 122 and the liquid supply line 110, allowing liquid from the second boiler 20 to be supplied to the first boiler 10 through the connection line 122 and liquid supply line 110.

In summary, the connection line 122 can be used for supplying steam to the second boiler 20, or for supplying liquid to the first boiler 10. It can reduce piping requirements and simplify overall pipeline.

Furthermore, in one embodiment of the present application, the liquid pipeline system 100 also comprises a cold liquid line 140.The cold liquid line 140 can supply liquid directly from the liquid supply source 30 to the first boiler 10. In this embodiment, the output connection valve 40 also comprises a fourth valve port 44. The cold liquid line 140 connects the liquid supply source 30 and the fourth valve port 44. The first water pump 35 is provided on the cold liquid line 140 between the liquid supply source 30 and the fourth valve port 44.

The liquid supply line 110 is further connected to a first multiport valve 50. The first multiport valve 50 comprises a first inlet 51, a first outlet 53, and a second outlet 54. The first inlet 51 is connected to the third valve port 43. The first outlet 53 is connected to either the outlet assembly 33 or the brewing device 38. The second outlet 54 is connected to the liquid inlet of the first boiler 10 forming part of the liquid supply line 110.

In this embodiment, the output connection valve 40 can be a mixing valve. Operating the first water pump 35 supplies cold water to the output connection valve 40 through the cold liquid line 140, opening the first electromagnetic valve 123 supplies steam to the output connection valve 40 through the steam supply branch line 121, allows steam and cold water to mix and form hot water.

The output connection valve 40 can selectively deliver hot water from the second boiler 20 to the first multiport valve 50, or deliver hot water formed by mixing cold water from the cold liquid line 140 with steam from the first boiler 10 to the first multiport valve 50, or deliver cold water from the cold liquid line 140 to the first multiport valve 50. The first multiport valve 50 is used to selectively deliver liquid through the first outlet 53 to either the outlet assembly 33 or the brewing device 38, or deliver liquid through the second outlet 54 to the first boiler 10.

It can be understood that through the output connection valve 40 and first multiport valve 50, hot water can be selectively supplied from the second boiler 20 to the first boiler 10, or cold water can be supplied directly to the first boiler 10 through the cold liquid line 140, or hot water can be supplied to either the outlet assembly 33 or brewing device 38 through the output connection valve 40.

For example: starting the first water pump 35, opening the fourth valve port 44 and third valve port 43 of the output connection valve 40, and opening the first inlet 51 and second outlet 54 of the first multiport valve 50 allows cold water to be supplied directly to the first boiler 10 through the cold liquid line 140.

Starting either the first water pump 35 or second water pump 36, opening the second valve port 42 and third valve port 43 of the output connection valve 40, and opening the first inlet 51 and second outlet 54 of the first multiport valve 50 allows liquid from the second boiler 20 to be supplied to the first boiler 10.

Starting the first water pump 35, opening the first electromagnetic valve 123 on the steam supply branch line 121, opening the first valve port 41, fourth valve port 44, and third valve port 43 of the output connection valve 40, and opening the first inlet 51 and first outlet 53 of the first multiport valve 50 allows cold water from the liquid supply source 30 and steam from the first boiler 10 to be supplied to the output connection valve 40 to mix and form hot water. The hot water can be supplied to either the outlet assembly 33 or brewing device 38.

The liquid outlet of the second boiler 20 can be connected to a connection port 23 and a hot water output port 24. The connection port 23 can connect to the second valve port 42 of the output connection valve 40 through the connection line 122. The hot water output port 24 can connect to either the outlet assembly 33 or the brewing device 38 through a hot water delivery line, thus allowing hot water from the second boiler 20 to be supplied directly to either the outlet assembly 33 or the brewing device 38. Thus, the liquid pipeline system 100 comprises two hot liquid supply lines, improving the operating efficiency of the beverage device.

For example, when making Americano coffee, the hot water output port 24 can connect to the brewing device 38 through the hot water delivery line to provide hot water for high-temperature, high-pressure coffee extraction. At the same time, supplying cold water from the liquid supply source 30 and steam from the first boiler 10 to the output connection valve 40 to mix and form hot water, the hot water is supplied to the outlet assembly 33, enabling efficient Americano coffee preparation.

In this embodiment, the steam supply branch line 121 can supply steam to the second boiler 20. Or the steam supply branch line 121 can supply steam to mix with cold water from the cold liquid line 140 to form hot water, for supply to either the brewing device 38 or outlet assembly 33, simplifying the piping arrangement.

The steam supply branch line 121 further comprises a first check valve 124. The first check valve 124 is located downstream of the first electromagnetic valve 123. The first check valve 124 allows liquid flow from the first boiler 10 to the output connection valve 40, while preventing liquid flow from the output connection valve 40 to the first boiler 10. This prevents downstream pressure, such as pressure from the second boiler 20, from reversing into the steam supply branch line 121 and causing the first electromagnetic valve 123 to open under pressure.

In this embodiment, the first steam cleaning branch line 131 connects the steam outlet of the first boiler 10 to the second inlet 52 of the first multiport valve 50.

A second multiport valve 60 can be connected to the second steam supply line 130. The multiple outlets of the second steam supply line 130 can respectively connect to the first steam cleaning branch line 131 and second steam cleaning branch line 132, one outlet of the second steam supply line 130 connects to a milk frother.

Furthermore, in one embodiment of the present application, the control method for the beverage device also comprises a descaling step, the descaling step comprising:
receiving a descaling signal;
controlling the water pump to operate, and controlling the liquid supply line 110 to open, supplying cleaning solution from the liquid supply source 30 to the second boiler 20, and supplying cleaning solution from the second boiler 20 to the first boiler 10 through the liquid supply line 110;
controlling the first boiler 10 to heat up, controlling the first discharge valve 15 to open, discharging the cleaning solution in the first boiler 10 through the first discharge line 11 by steam generated in the first boiler 10.

In this embodiment, the liquid supply line 110 connects the liquid inlet of the first boiler 10 with the liquid outlet of the second boiler 20. Users can issue a descaling signal by selecting the descaling mode through the beverage device's control panel.

The liquid supply source 30 can specifically be the second liquid supply source 32 for supplying cleaning solution. When the beverage device receives a descaling signal, supplying cleaning solution from the second liquid supply source 32 to both the first boiler 10 and second boiler 20. The cleaning solution reacts with scale in the first boiler 10 and the second boiler 20 for a period of time, for example, the first discharge line 11 can be opened after the cleaning solution has been in the first boiler 10 and second boiler 20 for a preset duration, allowing the cleaning solution to fully react with scale in both boilers for better scale removal effect.

During descaling, the cleaning solution containing scale in the first boiler 10 is discharged directly through the first discharge line 11, rather than flowing through downstream lines between the first boiler 10 and outlet assembly 33, preventing scale from blocking downstream lines.

Furthermore, in this embodiment, before controlling the first discharge valve 15 to open, the descaling step also comprises:
controlling the first steam supply line 120 to open to supply steam generated in the first boiler 10 to the second boiler 20, wherein the first steam supply line 120 connects the steam outlet of the first boiler 10 with the liquid outlet of the second boiler 20;
controlling the second discharge valve 22 on the second discharge line 21 to open, discharging the cleaning solution in the second boiler 20 through the second discharge line 21 by steam.

Before discharging the cleaning solution in the first boiler 10 through the first discharge line 11 by steam generated in the first boiler 10, the cleaning solution in the second boiler 20 is first emptied by steam generated in the first boiler 10.

In this embodiment, the second discharge line 21 is connected to the bottom of the second boiler 20. By opening the first steam supply line 120 to supply steam from the first boiler 10 to the second boiler 20, pressure in the second boiler 20 can be increased, allowing the cleaning solution in the second boiler 20 to be efficiently and completely discharged through the second discharge line 21, along with scale in the second boiler 20.

It should be understood that although this specification describes various embodiments, not every embodiment contains only one independent technical solution. This manner of description in the specification is merely for clarity. Those skilled in the art should consider the specification as a whole, and the technical solutions in various embodiments can also be appropriately combined to form other embodiments that those skilled in the art can understand.

The series of detailed descriptions listed above are merely specific explanations of feasible embodiments of the present application. They are not intended to limit the scope of protection of the present application.

## Claims

1. A control method for a beverage device, **characterized in that**, comprising:
starting counting of a number of beverage preparation completion signals upon receiving an Nth beverage preparation signal;
determining whether the number satisfies a first threshold relationship;
when the number satisfies the first threshold relationship, controlling a first discharge valve (15) on a first discharge line (11) to open for a first preset duration, to discharge liquid in a first boiler (10); wherein the first discharge line (11) is connected to the first boiler (10), and the first boiler (10) is configured to generate steam;
wherein the first threshold relationship is that the number equals an integer multiple of M;
wherein both N and M are natural numbers greater than or equal to 1.

2. The control method for the beverage device according to claim 1, wherein, after starting counting of a number of beverage preparation completion signals, the control method further comprises:
determining whether the number satisfies a second threshold relationship;
when the number satisfies the second threshold relationship, controlling a second discharge valve (22) on a second discharge line (21) to open for a second preset duration, to discharge liquid in a second boiler (20); wherein the second discharge line (21) is connected to the second boiler (20), and the second boiler (20) is configured to supply liquid to the first boiler (10);
wherein the second threshold relationship is that the number equals an integer multiple of J;
wherein J is a natural number greater than or equal to 1;
preferably, wherein J is greater than or equal to M.

3. The control method for the beverage device according to claim 2, wherein a liquid level sensor (13) is provided inside the first boiler (10), the control method further comprises a liquid replenishment step, wherein the liquid replenishment step comprises:
detecting the working parameter(s) of the liquid level sensor (13);
when the working parameter(s) satisfies a liquid replenishment condition, controlling a water pump to operate and controlling a liquid supply line (110) to open, so as to supply liquid from the second boiler (20) to the first boiler (10), wherein the liquid supply line (110) connects a liquid outlet of the second boiler (20) with a liquid inlet of the first boiler (10);
when the working parameter(s) does not satisfy the liquid replenishment condition, controlling the liquid supply line (110) to close.

4. The control method for the beverage device according to any one of claims 1 to 3, wherein the first discharge line (11) is connected to a bottom of the first boiler (10), the control method further comprises an emptying step, wherein the emptying step comprises:
receiving an emptying signal;
controlling the first discharge valve (15) to open to discharge liquid in the first boiler (10) through the first discharge line (11) by steam generated in the first boiler (10).

5. The control method for the beverage device according to claim 2 and 4, wherein before controlling the first discharge valve (15) to open, the emptying step further comprises:
controlling a first steam supply line (120) to open to supply steam in the first boiler (10) to the second boiler (20), wherein the first steam supply line (120) connects a steam outlet of the first boiler (10) with a liquid outlet of the second boiler (20);
controlling a second discharge valve (22) on a second discharge line (21) to open to discharge liquid in the second boiler (20) through the second discharge line (21) by steam from the first boiler (10), wherein the second discharge line (21) is connected to a bottom of the second boiler (20); and / or
wherein, before controlling the first discharge valve (15) to open, the emptying step further comprises:
controlling a second steam supply line (130) to open to allow steam in the first boiler (10) to enter the second steam supply line (130), discharging liquid in the second steam supply line (130) through an outlet assembly (33) by steam from the first boiler (10), wherein the second steam supply line (130) connects a steam outlet of the first boiler (10) with the outlet assembly (33).

6. The control method for the beverage device according to any one of claims 1 to 3, wherein the first discharge line (11) is connected to a bottom of the first boiler (10), the control method further comprises a descaling step, wherein the descaling step comprises:
receiving a descaling signal;
controlling a water pump to operate and controlling a liquid supply line (110) to open, supplying cleaning solution from a liquid supply source (30) to a second boiler (20), and supplying the cleaning solution from the second boiler (20) to the first boiler (10) through the liquid supply line (110), wherein the liquid supply line (110) connects a liquid inlet of the first boiler (10) with a liquid outlet of the second boiler (20);
controlling the first boiler (10) to heat up, controlling the first discharge valve (15) to open, discharging the cleaning solution in the first boiler (10) through the first discharge line (11) by steam generated in the first boiler (10).

7. The control method for the beverage device according to claim 6, wherein before controlling the first discharge valve (15) to open, the descaling step further comprises:
controlling a first steam supply line (120) to open to supply steam generated by the first boiler (10) to the second boiler (20), wherein the first steam supply line (120) connects a steam outlet of the first boiler (10) with the liquid outlet of the second boiler (20), and the liquid outlet is provided at a top of the second boiler (20);
controlling a second discharge valve (22) on a second discharge line (21) to open, discharging the cleaning solution in the second boiler (20) through the second discharge line (21) by the steam, wherein the second discharge line (21) is connected to a bottom of the second boiler (20).

8. A beverage device, comprising:
a liquid supply source (30);
an outlet assembly (33), configured to output beverage;
a first boiler (10), connected between the liquid supply source (30) and the outlet assembly (33), configured to generate steam;
a first discharge line (11), wherein an input end of the first discharge line (11) is connected to the first boiler (10), an output end of the first discharge line (11) is a fluid discharge outlet; a first discharge valve (15) is provided between the input end of the first discharge line (11) and the output end of the first discharge line (11); and
a controller, electrically connected to the first discharge valve (15),
**characterized in that**
the controller is configured to execute the control method for the beverage device according to any one of claims 1 to 7.

9. The beverage device according to claim 8, wherein the input end of the first discharge line (11) is connected to a bottom of the first boiler (10).

10. The beverage device according to claim 8, wherein further comprising a liquid level sensor (13) mounted inside the first boiler (10), wherein the liquid level sensor (13) is mounted at a position away from the input end of the first discharge line (11), and the liquid level sensor (13) is configured to detect a liquid level signal in the first boiler (10);
preferably, wherein a water pump is connected between the liquid supply source (30, 31) and the first boiler (10);
the controller is electrically connected to the liquid level sensor (13) and the water pump respectively, and the controller is further configured to receive the working parameter(s) of the liquid level sensor (13) to obtain the liquid level signal in the first boiler (10), and when the working parameter(s) satisfies a liquid replenishment condition, control the water pump to work to supply liquid from the liquid supply source (30, 31) to the first boiler (10).

11. The beverage device according to any one of claims 8 to 10, wherein further comprising a second boiler (20) and a second discharge line (21), wherein the second boiler (20) is connected between the liquid supply source (30) and the outlet assembly (33), the second boiler (20) is configured to generate hot water, an input end of the second discharge line (21) is connected to a bottom of the second boiler (20), an output end of the second discharge line (21) is a fluid discharge outlet, and a second discharge valve (22) is provided between the input end of the second discharge line (21) and the output end of the second discharge line (21).

12. The beverage device according to claim 11, wherein further comprising a first steam supply line (120), wherein the first steam supply line (120) connects a steam outlet of the first boiler (10) with a liquid outlet of the second boiler (20), the liquid outlet of the second boiler (20) is located at a top of the second boiler (20), and the first steam supply line (120) is configured to supply steam in the first boiler (10) to the second boiler (20) to discharge liquid in the second boiler (20) through the second discharge line (21) by the steam.

13. The beverage device according to claim 12, wherein an output connection valve (40) is provided on the first steam supply line (120), wherein the output connection valve (40) comprises a first valve port (41), a second valve port (42) and a third valve port (43), the first steam supply line (120) comprises a steam supply branch line (121) connecting the steam outlet of the first boiler (10) and the first valve port (41), the first steam supply line (120) further comprises a connection line (122) connecting the second valve port (42) with the liquid outlet of the second boiler (20), and a liquid supply line (110) is connected between the third valve port (43) and a liquid inlet of the first boiler (10);
the steam from the first boiler (10) can be supplied to the second boiler (20) successively through the steam supply branch line (121), the output connection valve (40) and the connection line (122);
the hot water from the second boiler (20) can be supplied to the first boiler (10) successively through the connection line (122), the output connection valve (40) and the liquid supply line (110).

14. The beverage device according to any one of claims 8 to 10, wherein the first discharge valve (15) comprises a liquid discharge valve body (151), wherein the liquid discharge valve body (151) comprises an inlet (152), an outlet (153) and a liquid channel (154), and the inlet (152) is in communication with the first boiler (10);
one end of the liquid channel (154) near the inlet (152) is a flow passage port (1541), and the other end of the liquid channel (154) is in communication with the outlet (153);
the first discharge valve (15) further comprises an electromagnetic drive assembly (158) and a valve core assembly (156), wherein the electromagnetic drive assembly (158) is configured to drive the valve core assembly (156) to move to close or open the flow passage port (1541), when the valve core assembly (156) opens the flow passage port (1541), the inlet (152) and the outlet (153) are in fluid communication through the liquid channel (154).

15. The beverage device according to claim 14, wherein the first discharge valve (15) further comprises a reset element (157) connected to the valve core assembly (156);
under the drive of the electromagnetic drive assembly (158), the valve core assembly (156) can move in a direction away from the flow passage port (1541) to open the flow passage port (1541);
under the drive of the reset element (157), the valve core assembly (156) can move in a direction toward the flow passage port (1541) until closing the flow passage port (1541); and / or
wherein the valve core assembly (156) comprises a sealing member (1561) for sealing the flow passage port (1541), the liquid discharge valve body (151) comprises a flow passage wall (1542) forming the liquid channel (154), and one end of the flow passage wall (1542) forming the flow passage port (1541) can abut against the sealing member (1561) to close the flow passage port (1541).

## Patentansprüche

1. Steuerverfahren für eine Getränkevorrichtung, **dadurch gekennzeichnet, dass** es umfasst:
Starten eines Zählens einer Anzahl von Getränkezubereitungsabschluss-Signalen bei Empfang eines N-ten Getränkezubereitungssignals;
Bestimmen, ob die Anzahl eine erste Schwellenwertbeziehung erfüllt;
wenn die Anzahl die erste Schwellenwertbeziehung erfüllt, Steuern eines ersten Ablassventils (15) an einer ersten Ablassleitung (11) zum Öffnen für eine erste vorgegebene Dauer, um Flüssigkeit in einem ersten Boiler (10) abzulassen; wobei die erste Ablassleitung (11) mit dem ersten Boiler (10) verbunden ist und der erste Boiler (10) dazu eingerichtet ist, Dampf zu erzeugen;
wobei die erste Schwellenwertbeziehung darin besteht, dass die Anzahl einem ganzzahligen Vielfachen von M entspricht;
wobei sowohl N als auch M natürliche Zahlen größer oder gleich 1 sind.

2. Steuerverfahren für die Getränkevorrichtung nach Anspruch 1, wobei das Steuerverfahren nach dem Starten des Zählens einer Anzahl von Getränkezubereitungsabschluss-Signalen ferner Folgendes umfasst:
Bestimmen, ob die Anzahl eine zweite Schwellenwertbeziehung erfüllt;
wenn die Anzahl die zweite Schwellenwertbeziehung erfüllt, Steuern eines zweiten Ablassventils (22) an einer zweiten Ablassleitung (21) zum Öffnen für eine zweite vorgegebene Dauer, um Flüssigkeit in einem zweiten Boiler (20) abzulassen;
wobei die zweite Ablassleitung (21) mit dem zweiten Boiler (20) verbunden ist und der zweite Boiler (20) dazu eingerichtet ist, dem ersten Boiler (10) Flüssigkeit zuzuführen;
wobei die zweite Schwellenwertbeziehung darin besteht, dass die Anzahl einem ganzzahligen Vielfachen von J entspricht;
wobei J eine natürliche Zahl größer oder gleich 1 ist;
vorzugsweise wobei J größer oder gleich M ist.

3. Steuerverfahren für die Getränkevorrichtung nach Anspruch 2, wobei ein Flüssigkeitsstandsensor (13) innerhalb des ersten Boilers (10) vorgesehen ist, wobei das Steuerverfahren ferner einen Flüssigkeitsnachfüllschritt umfasst, wobei der Flüssigkeitsnachfüllschritt Folgendes umfasst:
Erfassen des/der Betriebsparameter(s) des Flüssigkeitsstandsensors (13);
wenn der/die Betriebsparameter eine Flüssigkeitsnachfüllbedingung erfüllt/erfüllen, Steuern einer Wasserpumpe zum Betrieb und Steuern einer Flüssigkeitszufuhrleitung (110) zum Öffnen, um Flüssigkeit von dem zweiten Boiler (20) dem ersten Boiler (10) zuzuführen, wobei die Flüssigkeitszufuhrleitung (110) einen Flüssigkeitsauslass des zweiten Boilers (20) mit einem Flüssigkeitseinlass des ersten Boilers (10) verbindet;
wenn der/die Betriebsparameter die Flüssigkeitsnachfüllbedingung nicht erfüllt/erfüllen, Steuern der Flüssigkeitszufuhrleitung (110) zum Schließen.

4. Steuerverfahren für die Getränkevorrichtung nach einem der Ansprüche 1 bis 3, wobei die erste Ablassleitung (11) mit einem Boden des ersten Boilers (10) verbunden ist, wobei das Steuerverfahren ferner einen Entleerungsschritt umfasst, wobei der Entleerungsschritt Folgendes umfasst:
Empfangen eines Entleerungssignals;
Steuern des ersten Ablassventils (15) zum Öffnen, um Flüssigkeit in dem ersten Boiler (10) mittels in dem ersten Boiler (10) erzeugten Dampfs durch die erste Ablassleitung (11) abzulassen.

5. Steuerverfahren für die Getränkevorrichtung nach Anspruch 2 und 4, wobei der Entleerungsschritt vor dem Steuern des ersten Ablassventils (15) zum Öffnen ferner Folgendes umfasst:
Steuern einer ersten Dampfzufuhrleitung (120) zum Öffnen, um Dampf in dem ersten Boiler (10) dem zweiten Boiler (20) zuzuführen, wobei die erste Dampfzufuhrleitung (120) einen Dampfauslass des ersten Boilers (10) mit einem Flüssigkeitsauslass des zweiten Boilers (20) verbindet;
Steuern eines zweiten Ablassventils (22) an einer zweiten Ablassleitung (21) zum Öffnen, um Flüssigkeit in dem zweiten Boiler (20) mittels Dampf aus dem ersten Boiler (10) durch die zweite Ablassleitung (21) abzulassen, wobei die zweite Ablassleitung (21) mit einem Boden des zweiten Boilers (20) verbunden ist;
und/oder wobei der Entleerungsschritt vor dem Steuern des ersten Ablassventils (15) zum Öffnen ferner Folgendes umfasst:
Steuern einer zweiten Dampfzufuhrleitung (130) zum Öffnen, um zu ermöglichen, dass Dampf in dem ersten Boiler (10) in die zweite Dampfzufuhrleitung (130) eintritt, wobei Flüssigkeit in der zweiten Dampfzufuhrleitung (130) mittels Dampf aus dem ersten Boiler (10) durch eine Auslassanordnung (33) abgelassen wird, wobei die zweite Dampfzufuhrleitung (130) einen Dampfauslass des ersten Boilers (10) mit der Auslassanordnung (33) verbindet.

6. Steuerverfahren für die Getränkevorrichtung nach einem der Ansprüche 1 bis 3, wobei die erste Ablassleitung (11) mit einem Boden des ersten Boilers (10) verbunden ist, wobei das Steuerverfahren ferner einen Entkalkungsschritt umfasst, wobei der Entkalkungsschritt Folgendes umfasst:
Empfangen eines Entkalkungssignals;
Steuern einer Wasserpumpe zum Betrieb und Steuern einer Flüssigkeitszufuhrleitung (110) zum Öffnen, Zuführen einer Reinigungslösung von einer Flüssigkeitszufuhrquelle (30) zu einem zweiten Boiler (20) und Zuführen der Reinigungslösung von dem zweiten Boiler (20) durch die Flüssigkeitszufuhrleitung (110) zu dem ersten Boiler (10), wobei die Flüssigkeitszufuhrleitung (110) einen Flüssigkeitseinlass des ersten Boilers (10) mit einem Flüssigkeitsauslass des zweiten Boilers (20) verbindet;
Steuern des ersten Boilers (10) zum Aufheizen, Steuern des ersten Ablassventils (15) zum Öffnen, wobei die Reinigungslösung in dem ersten Boiler (10) mittels in dem ersten Boiler (10) erzeugten Dampfs durch die erste Ablassleitung (11) abgelassen wird.

7. Steuerverfahren für die Getränkevorrichtung nach Anspruch 6, wobei der Entkalkungsschritt vor dem Steuern des ersten Ablassventils (15) zum Öffnen ferner Folgendes umfasst:
Steuern einer ersten Dampfzufuhrleitung (120) zum Öffnen, um durch den ersten Boiler (10) erzeugten Dampf dem zweiten Boiler (20) zuzuführen, wobei die erste Dampfzufuhrleitung (120) einen Dampfauslass des ersten Boilers (10) mit dem Flüssigkeitsauslass des zweiten Boilers (20) verbindet und der Flüssigkeitsauslass an einer Oberseite des zweiten Boilers (20) vorgesehen ist;
Steuern eines zweiten Ablassventils (22) an einer zweiten Ablassleitung (21) zum Öffnen, wobei die Reinigungslösung in dem zweiten Boiler (20) mittels des Dampfs durch die zweite Ablassleitung (21) abgelassen wird, wobei die zweite Ablassleitung (21) mit einem Boden des zweiten Boilers (20) verbunden ist.

8. Getränkevorrichtung mit
einer Flüssigkeitszufuhrquelle (30);
einer Auslassanordnung (33), die dazu eingerichtet ist, ein Getränk auszugeben;
einem ersten Boiler (10), der zwischen der Flüssigkeitszufuhrquelle (30) und der Auslassanordnung (33) verbunden und dazu eingerichtet ist, Dampf zu erzeugen;
einer ersten Ablassleitung (11), wobei ein Eingangsende der ersten Ablassleitung (11) mit dem ersten Boiler (10) verbunden ist und ein Ausgangsende der ersten Ablassleitung (11) einen Flüssigkeitsauslass bildet, wobei ein erstes Ablassventil (15) zwischen dem Eingangsende der ersten Ablassleitung (11) und dem Ausgangsende der ersten Ablassleitung (11) vorgesehen ist; und
einer Steuereinheit, die elektrisch mit dem ersten Ablassventil (15) verbunden ist,
**dadurch gekennzeichnet, dass** die Steuereinheit dazu eingerichtet ist, das Steuerverfahren für die Getränkevorrichtung nach einem der Ansprüche 1 bis 7 auszuführen.

9. Getränkevorrichtung nach Anspruch 8, wobei das Eingangsende der ersten Ablassleitung (11) mit einem Boden des ersten Boilers (10) verbunden ist.

10. Getränkevorrichtung nach Anspruch 8, ferner mit einem innerhalb des ersten Boilers (10) angebrachten Flüssigkeitsstandsensor (13), wobei der Flüssigkeitsstandsensor (13) an einer vom Eingangsende der ersten Ablassleitung (11) beabstandeten Position angebracht ist und der Flüssigkeitsstandsensor (13) dazu eingerichtet ist, ein Flüssigkeitsstandsignal in dem ersten Boiler (10) zu erfassen;
vorzugsweise wobei eine Wasserpumpe zwischen der Flüssigkeitszufuhrquelle (30, 31) und dem ersten Boiler (10) verbunden ist;
wobei die Steuereinheit jeweils elektrisch mit dem Flüssigkeitsstandsensor (13) und der Wasserpumpe verbunden ist und ferner dazu eingerichtet ist, den/die Betriebsparameter des Flüssigkeitsstandsensors (13) zu empfangen, um das Flüssigkeitsstandsignal in dem ersten Boiler (10) zu erhalten, und, wenn der/die Betriebsparameter eine Flüssigkeitsnachfüllbedingung erfüllt/erfüllen, die Wasserpumpe zum Betrieb zu steuern, um Flüssigkeit von der Flüssigkeitszufuhrquelle (30, 31) dem ersten Boiler (10) zuzuführen.

11. Getränkevorrichtung nach einem der Ansprüche 8 bis 10, ferner mit einem zweiten Boiler (20) und einer zweite Ablassleitung (21), wobei der zweite Boiler (20) zwischen der Flüssigkeitszufuhrquelle (30) und der Auslassanordnung (33) verbunden ist, wobei der zweite Boiler (20) dazu eingerichtet ist, Heißwasser zu erzeugen, wobei ein Eingangsende der zweiten Ablassleitung (21) mit einem Boden des zweiten Boilers (20) verbunden ist, wobei ein Ausgangsende der zweiten Ablassleitung (21) einen Flüssigkeitsauslass bildet und wobei ein zweites Ablassventil (22) zwischen dem Eingangsende der zweiten Ablassleitung (21) und dem Ausgangsende der zweiten Ablassleitung (21) vorgesehen ist.

12. Getränkevorrichtung nach Anspruch 11, ferner mit einer ersten Dampfzufuhrleitung (120), wobei die erste Dampfzufuhrleitung (120) einen Dampfauslass des ersten Boilers (10) mit einem Flüssigkeitsauslass des zweiten Boilers (20) verbindet, der Flüssigkeitsauslass des zweiten Boilers (20) an einer Oberseite des zweiten Boilers (20) angeordnet ist und die erste Dampfzufuhrleitung (120) dazu eingerichtet ist, Dampf in dem ersten Boiler (10) dem zweiten Boiler (20) zuzuführen, um Flüssigkeit in dem zweiten Boiler (20) mittels des Dampfs durch die zweite Ablassleitung (21) abzulassen.

13. Getränkevorrichtung nach Anspruch 12, wobei ein Auslassverbindungsventil (40) an der ersten Dampfzufuhrleitung (120) vorgesehen ist, wobei das Auslassverbindungsventil (40) einen ersten Ventilanschluss (41), einen zweiten Ventilanschluss (42) und einen dritten Ventilanschluss (43) umfasst, wobei die erste Dampfzufuhrleitung (120) eine Dampfzufuhrzweigleitung (121) aufweist, die den Dampfauslass des ersten Boilers (10) und den ersten Ventilanschluss (41) verbindet, wobei die erste Dampfzufuhrleitung (120) ferner eine Verbindungsleitung (122) aufweist, die den zweiten Ventilanschluss (42) mit dem Flüssigkeitsauslass des zweiten Boilers (20) verbindet, und eine Flüssigkeitszufuhrleitung (110) zwischen dem dritten Ventilanschluss (43) und einem Flüssigkeitseinlass des ersten Boilers (10) verbunden ist;
wobei der Dampf aus dem ersten Boiler (10) nacheinander durch die Dampfzufuhrzweigleitung (121), das Auslassverbindungsventil (40) und die Verbindungsleitung (122) dem zweiten Boiler (20) zugeführt werden kann;
wobei das Heißwasser aus dem zweiten Boiler (20) nacheinander durch die Verbindungsleitung (122), das Auslassverbindungsventil (40) und die Flüssigkeitszufuhrleitung (110) dem ersten Boiler (10) zugeführt werden kann.

14. Getränkevorrichtung nach einem der Ansprüche 8 bis 10, wobei das erste Ablassventil (15) einen Flüssigkeitsablassventilkörper (151) aufweist, wobei der Flüssigkeitsablassventilkörper (151) einen Einlass (152), einen Auslass (153) und einen Flüssigkeitskanal (154) aufweist und der Einlass (152) mit dem ersten Boiler (10) in Verbindung steht;
wobei ein dem Einlass (152) nahes Ende des Flüssigkeitskanals (154) eine Durchlassöffnung (1541) ist und das andere Ende des Flüssigkeitskanals (154) mit dem Auslass (153) in Verbindung steht;
wobei das erste Ablassventil (15) ferner eine elektromagnetische Antriebsanordnung (158) und eine Ventilkernanordnung (156) aufweist, wobei die elektromagnetische Antriebsanordnung (158) dazu eingerichtet ist, die Ventilkernanordnung (156) zu bewegen, um die Durchlassöffnung (1541) zu schließen oder zu öffnen, und, wenn die Ventilkernanordnung (156) die Durchlassöffnung (1541) öffnet, der Einlass (152) und der Auslass (153) über den Flüssigkeitskanal (154) in Fluidverbindung stehen.

15. Getränkevorrichtung nach Anspruch 14, wobei das erste Ablassventil (15) ferner ein mit der Ventilkernanordnung (156) verbundenes Rückstellelement (157) aufweist;
wobei sich die Ventilkernanordnung (156) unter dem Antrieb der elektromagnetischen Antriebsanordnung (158) in einer von der Durchlassöffnung (1541) weg gerichteten Richtung bewegen kann, um die Durchlassöffnung (1541) zu öffnen;
wobei sich die Ventilkernanordnung (156) unter dem Antrieb des Rückstellelements (157) in einer zu der Durchlassöffnung (1541) gerichteten Richtung bewegen kann, bis die Durchlassöffnung (1541) geschlossen wird; und/oder
wobei die Ventilkernanordnung (156) ein Dichtelement (1561) zum Abdichten der Durchlassöffnung (1541) aufweist, der Flüssigkeitsablassventilkörper (151) eine den Flüssigkeitskanal (154) bildende Durchlasswand (1542) aufweist und ein Ende der die Durchlassöffnung (1541) bildenden Durchlasswand (1542) an dem Dichtelement (1561) anliegen kann, um die Durchlassöffnung (1541) zu schließen.

## Revendications

1. Procédé de commande pour un dispositif de boisson, **caractérisé en ce qu'**il comprend :
le démarrage du comptage d'un nombre de signaux de fin de préparation de boisson lors de la réception d'un nième signal de préparation de boisson ;
la détermination établissant si le nombre satisfait ou non à une première relation de seuil ;
lorsque le nombre satisfait à la première relation de seuil, la commande de l'ouverture d'une première soupape de décharge (15) sur une première ligne de décharge (11) pendant une première durée prédéfinie afin de décharger du liquide dans une première chaudière (10) ; dans lequel la première ligne de décharge (11) est reliée à la première chaudière (10), et la première chaudière (10) est configurée pour générer de la vapeur ;
dans lequel la première relation de seuil est que le nombre est égal à un multiple entier de M ;
dans lequel N et M sont tous deux des nombres naturels supérieurs ou égaux à 1.

2. Procédé de commande pour le dispositif de boisson selon la revendication 1, dans lequel, après avoir démarré le comptage d'un nombre de signaux de fin de préparation de boisson, le procédé de commande comprend en outre :
la détermination établissant si le nombre satisfait ou non à une seconde relation de seuil ;
lorsque le nombre satisfait à la seconde relation de seuil, la commande de l'ouverture d'une seconde soupape de décharge (22) sur une seconde ligne de décharge (21) pendant une seconde durée prédéfinie afin de décharger du liquide dans une seconde chaudière (20) ; dans lequel la seconde ligne de décharge (21) est reliée à la seconde chaudière (20), et la seconde chaudière (20) est configurée pour alimenter en liquide la première chaudière (10) ;
dans lequel la seconde relation de seuil est que le nombre est égal à un multiple entier de J ;
dans lequel J est un nombre naturel supérieur ou égal à 1 ;
de préférence, dans lequel J est supérieur ou égal à M.

3. Procédé de commande pour le dispositif de boisson selon la revendication 2, dans lequel un capteur de niveau de liquide (13) est prévu à l'intérieur de la première chaudière (10), le procédé de commande comprend en outre une étape de réapprovisionnement en liquide, dans lequel l'étape de réapprovisionnement en liquide comprend :
la détection du ou des paramètres de fonctionnement du capteur de niveau de liquide (13) ;
lorsque le ou les paramètres de fonctionnement satisfont à une condition de réapprovisionnement en liquide, la commande du fonctionnement d'une pompe à eau et la commande de l'ouverture d'une ligne d'alimentation en liquide (110) afin d'alimenter la première chaudière (10) en liquide à partir de la seconde chaudière (20), dans lequel la ligne d'alimentation en liquide (110) relie une sortie de liquide de la seconde chaudière (20) à une entrée de liquide de la première chaudière (10) ;
lorsque le ou les paramètres de fonctionnement ne satisfont pas à la condition de réapprovisionnement en liquide, la commande de la fermeture de la ligne d'alimentation en liquide (110).

4. Procédé de commande pour le dispositif de boisson selon l'une quelconque des revendications 1 à 3, dans lequel la première ligne de décharge (11) est reliée au fond de la première chaudière (10), le procédé de commande comprend en outre une étape de vidange, dans lequel l'étape de vidange comprend :
la réception d'un signal de vidange ;
la commande de l'ouverture de la première soupape de décharge (15) afin de décharger du liquide de la première chaudière (10) via la première ligne de décharge (11) grâce à la vapeur générée dans la première chaudière (10).

5. Procédé de commande pour le dispositif de boisson selon les revendications 2 et 4, dans lequel, avant de commander l'ouverture de la première soupape de décharge (15), l'étape de vidange comprend en outre :
la commande de l'ouverture d'une première ligne d'alimentation en vapeur (120) afin d'alimenter la seconde chaudière (20) en vapeur à partir de la première chaudière (10), dans lequel la première ligne d'alimentation en vapeur (120) relie une sortie de vapeur de la première chaudière (10) à une sortie de liquide de la seconde chaudière (20) ;
la commande de l'ouverture d'une seconde soupape de décharge (22) sur une seconde ligne de décharge (21) afin de décharger du liquide dans la seconde chaudière (20) via la seconde ligne de décharge (21) grâce à la vapeur provenant de la première chaudière (10), dans lequel la seconde ligne de décharge (21) est reliée au fond de la seconde chaudière (20) ; et/ou
dans lequel, avant de commander l'ouverture de la première soupape de décharge (15), l'étape de vidange comprend en outre :
la commande de l'ouverture d'une seconde ligne d'alimentation en vapeur (130) afin de permettre à la vapeur de la première chaudière (10) d'entrer dans la seconde ligne d'alimentation en vapeur (130), le déchargement de liquide dans la seconde ligne d'alimentation en vapeur (130) via un ensemble de sortie (33) grâce à la vapeur provenant de la première chaudière (10), dans lequel la seconde ligne d'alimentation en vapeur (130) relie une sortie de vapeur de la première chaudière (10) à l'ensemble de sortie (33).

6. Procédé de commande pour le dispositif de boisson selon l'une quelconque des revendications 1 à 3, dans lequel la première ligne de décharge (11) est reliée au fond de la première chaudière (10), le procédé de commande comprend en outre une étape de détartrage, dans lequel l'étape de détartrage comprend :
la réception d'un signal de détartrage ;
la commande du fonctionnement d'une pompe à eau et la commande de l'ouverture d'une ligne d'alimentation en liquide (110), l'alimentation d'une seconde chaudière (20) en solution de nettoyage à partir d'une source d'alimentation en liquide (30) et l'alimentation de la première chaudière (10) en solution de nettoyage à partir de la seconde chaudière (20) via la ligne d'alimentation en liquide (110), dans lequel la ligne d'alimentation en liquide (110) relie une entrée de liquide de la première chaudière (10) à une sortie de liquide de la seconde chaudière (20) ;
la commande du chauffage de la première chaudière (10), la commande de l'ouverture de la première soupape de décharge (15), la décharge de la solution de nettoyage de la première chaudière (10) via la première ligne de décharge (11) grâce à la vapeur générée dans la première chaudière (10).

7. Procédé de commande pour le dispositif de boisson selon la revendication 6, dans lequel, avant de commander l'ouverture de la première soupape de décharge (15), l'étape de détartrage comprend en outre :
la commande de l'ouverture d'une première ligne d'alimentation en vapeur (120) afin d'alimenter la seconde chaudière (20) en vapeur générée par la première chaudière (10), dans lequel la première ligne d'alimentation en vapeur (120) relie une sortie de vapeur de la première chaudière (10) à la sortie de liquide de la seconde chaudière (20), et la sortie de liquide est prévue en haut de la seconde chaudière (20) ;
la commande de l'ouverture d'une seconde soupape de décharge (22) sur une seconde ligne de décharge (21), la décharge de la solution de nettoyage dans la seconde chaudière (20) via la seconde ligne de décharge (21) grâce à la vapeur, dans lequel la seconde ligne de décharge (21) est reliée au fond de la seconde chaudière (20).

8. Dispositif de boisson, comprenant :
une source d'alimentation en liquide (30) ;
un ensemble de sortie (33) configuré pour distribuer une boisson ;
une première chaudière (10) reliée entre la source d'alimentation en liquide (30) et l'ensemble de sortie (33), configurée pour générer de la vapeur ;
une première ligne de décharge (11), dans lequel une extrémité d'entrée de la première ligne de décharge (11) est reliée à la première chaudière (10), une extrémité de sortie de la première ligne de décharge (11) est une sortie de décharge de fluide ; une première soupape de décharge (15) est prévue entre l'extrémité d'entrée de la première ligne de décharge (11) et l'extrémité de sortie de la première ligne de décharge (11) ; et
un dispositif de commande, relié électriquement à la première soupape de décharge (15), **caractérisé en ce que** le dispositif de commande est configuré pour exécuter le procédé de commande pour le dispositif de boisson selon l'une quelconque des revendications 1 à 7.

9. Dispositif de boisson selon la revendication 8, dans lequel l'extrémité d'entrée de la première ligne de décharge (11) est reliée au fond de la première chaudière (10).

10. Dispositif de boisson selon la revendication 8, comprenant en outre un capteur de niveau de liquide (13) monté à l'intérieur de la première chaudière (10), dans lequel le capteur de niveau de liquide (13) est monté à une position éloignée de l'extrémité d'entrée de la première ligne de décharge (11), et le capteur de niveau de liquide (13) est configuré pour détecter un signal de niveau de liquide dans la première chaudière (10) ;
de préférence, dans lequel une pompe à eau est reliée entre la source d'alimentation en liquide (30, 31) et la première chaudière (10) ;
le dispositif de commande est relié électriquement au capteur de niveau de liquide (13) et à la pompe à eau respectivement, et le dispositif de commande est en outre configuré pour recevoir le(s) paramètre(s) de fonctionnement du capteur de niveau de liquide (13) afin d'obtenir le signal de niveau de liquide dans la première chaudière (10), et lorsque le(s) paramètre(s) de fonctionnement satisfont à une condition de réapprovisionnement en liquide, pour commander le fonctionnement de la pompe à eau pour alimenter la première chaudière (10) en liquide à partir de la source d'alimentation en liquide (30, 31).

11. Dispositif de boisson selon l'une quelconque des revendications 8 à 10, comprenant en outre une seconde chaudière (20) et une seconde ligne de décharge (21), dans lequel la seconde chaudière (20) est reliée entre la source d'alimentation en liquide (30) et l'ensemble de sortie (33), la seconde chaudière (20) est configurée pour générer de l'eau chaude, une extrémité d'entrée de la seconde ligne de décharge (21) est reliée au fond de la seconde chaudière (20), une extrémité de sortie de la seconde ligne de décharge (21) est une sortie de décharge de fluide et une seconde soupape de décharge (22) est prévue entre l'extrémité d'entrée de la seconde ligne de décharge (21) et l'extrémité de sortie de la seconde ligne de décharge (21).

12. Dispositif de boisson selon la revendication 11, comprenant en outre une première ligne d'alimentation en vapeur (120), dans lequel la première ligne d'alimentation en vapeur (120) relie une sortie de vapeur de la première chaudière (10) à une sortie de liquide de la seconde chaudière (20), la sortie de liquide de la seconde chaudière (20) est située au sommet de la seconde chaudière (20), et la première ligne d'alimentation en vapeur (120) est configurée pour alimenter la seconde chaudière (20) en vapeur à partir de la première chaudière (10) afin de décharger du liquide de la seconde chaudière (20) via la seconde ligne de décharge (21) grâce à la vapeur.

13. Dispositif de boisson selon la revendication 12, dans lequel une soupape de raccordement de sortie (40) est prévue sur la première ligne d'alimentation en vapeur (120), dans lequel la soupape de raccordement de sortie (40) comprend un premier orifice de soupape (41), un deuxième orifice de soupape (42) et un troisième orifice de soupape (43), la première ligne d'alimentation en vapeur (120) comprend une ligne de branchement d'alimentation en vapeur (121) reliant la sortie de vapeur de la première chaudière (10) et le premier orifice de soupape (41), la première ligne d'alimentation en vapeur (120) comprend en outre une ligne de raccordement (122) reliant le deuxième orifice de soupape (42) à la sortie de liquide de la seconde chaudière (20), et une ligne d'alimentation en liquide (110) est reliée entre le troisième orifice de soupape (43) et une entrée de liquide de la première chaudière (10) ;
la vapeur de la première chaudière (10) peut être fournie à la seconde chaudière (20) successivement via la ligne de branchement d'alimentation en vapeur (121), la soupape de raccordement de sortie (40) et la ligne de raccordement (122) ;
l'eau chaude de la seconde chaudière (20) peut être fournie à la première chaudière (10) successivement via la ligne de raccordement (122), la soupape de raccordement de sortie (40) et la ligne d'alimentation en liquide (110).

14. Dispositif de boisson selon l'une quelconque des revendications 8 à 10, dans lequel la première soupape de décharge (15) comprend un corps de soupape de décharge de liquide (151), dans lequel le corps de soupape de décharge de liquide (151) comprend une entrée (152), une sortie (153) et un canal de liquide (154), et l'entrée (152) est en communication avec la première chaudière (10) ;
une extrémité du canal de liquide (154) près de l'entrée (152) est un orifice de passage d'écoulement (1541), et l'autre extrémité du canal de liquide (154) est en communication avec la sortie (153) ;
la première soupape de décharge (15) comprend en outre un ensemble d'entraînement électromagnétique (158) et un ensemble de noyau de soupape (156), dans lequel l'ensemble d'entraînement électromagnétique (158) est configuré pour entraîner l'ensemble de noyau de soupape (156) à se déplacer afin de fermer ou d'ouvrir l'orifice de passage d'écoulement (1541), lorsque l'ensemble de noyau de soupape (156) ouvre l'orifice de passage d'écoulement (1541), l'entrée (152) et la sortie (153) sont en communication fluidique via le canal de liquide (154).

15. Dispositif de boisson selon la revendication 14, dans lequel la première soupape de décharge (15) comprend en outre un élément de réinitialisation (157) relié à l'ensemble de noyau de soupape (156) ;
sous l'action de l'ensemble d'entraînement électromagnétique (158), l'ensemble de noyau de soupape (156) peut se déplacer dans une direction s'éloignant de l'orifice de passage d'écoulement (1541) pour ouvrir l'orifice de passage d'écoulement (1541) ;
sous l'action de l'élément de réinitialisation (157), l'ensemble de noyau de soupape (156) peut se déplacer dans une direction vers l'orifice de passage d'écoulement (1541) jusqu'à la fermeture de l'orifice de passage d'écoulement (1541) ; et/ou
dans lequel l'ensemble de noyau de soupape (156) comprend un élément d'étanchéité (1561) pour sceller l'orifice de passage d'écoulement (1541), le corps de soupape de décharge de liquide (151) comprend une paroi de passage d'écoulement (1542) formant le canal de liquide (154), et une extrémité de la paroi de passage d'écoulement (1542) formant l'orifice de passage d'écoulement (1541) peut venir en butée contre l'élément d'étanchéité (1561) pour fermer l'orifice de passage d'écoulement (1541).
